(19) **Europäisches Patentamt**

**European Patent Office**

**Office européen des brevets**

(11) **EP 1 316 693 B1**

(12) **FASCICULE DE BREVET EUROPEEN**

(45) Date de publication et mention
de la délivrance du brevet:
**23.03.2005 Bulletin 2005/12**

(51) Int Cl.⁷: **F01N 9/00**, F01N 11/00

(21) Numéro de dépôt: **02292956.6**

(22) Date de dépôt: **29.11.2002**

(54) **Procéde et dispositif de diagnostic de l'état de fonctionnement d'une ligne d'échappement d'un moteur à combustion interne**

Verfahren und Vorrichtung zur Diagnose des Betriebszustandes der Abgasanlage einer Brennkraftmaschine

Method and device for diagnosing the operational condition of an exhaust gas line of an internal combustion engine

(84) Etats contractants désignés:
**DE ES GB IT**

(30) Priorité: **29.11.2001 FR 0115410**

(43) Date de publication de la demande:
**04.06.2003 Bulletin 2003/23**

(73) Titulaire: **Renault s.a.s.**
**92100 Boulogne Billancourt (FR)**

(72) Inventeurs:
• **Bourret, Stéphane**
**91410 Saint Cyr Sous Dourdan (FR)**

• **Leprieur, Laurent**
**91470 Limours (FR)**
• **Meurisse, Olivier**
**92160 Antony (FR)**

(74) Mandataire: **Cemeli, Eric**
**Renault Technocentre,**
**1 avenue du Golf,**
**Sce 0267 TCR AVA 056**
**78288 Guyancourt (FR)**

(56) Documents cités:
EP-A- 0 115 722       FR-A- 2 774 421
FR-A- 2 795 132       FR-A- 2 799 504
US-A- 4 522 027       US-A- 5 511 413

**Description**

La présente invention concerne le domaine du traitement des gaz d'échappement d'un moteur à combustion interne, par exemple de véhicule automobile, et, plus particulièrement, un procédé et un dispositif de diagnostic de l'état de fonctionnement d'une ligne d'échappement d'un tel moteur.

La présence d'un filtre à particules dans la - ligne d'échappement d'un moteur à combustion interne, en particulier d'un moteur Diesel, permet de diminuer considérablement la quantité de particules, poussières et autres suies, émises dans l'atmosphère, et de satisfaire ainsi aux normes antipollution.

Des dispositifs de régénération pilotés permettent de brûler périodiquement les particules piégées dans les filtres et d'éviter le colmatage de ces derniers.

Ces filtres sont généralement associés à des dispositifs de diagnostic, permettant de détecter les éventuels dysfonctionnements des différents moyens qui participent à l'élimination des particules.

Ces dispositifs de diagnostic ont essentiellement pour fonction de surveiller l'état de fonctionnement de la ligne d'échappement du moteur, en particulier du filtre à particules en vue de provoquer, en cas de défaillance d'un élément agissant sur le niveau de pollution du moteur, soit l'activation d'un mode de fonctionnement dégradé pour la mise en oeuvre de mesures préventives, soit encore l'arrêt du véhicule.

Ces dispositifs de diagnostic fonctionnent essentiellement en mesurant la pression différentielle régnant entre l'amont et l'aval du filtre à particules.

Ainsi, il est connu de comparer la valeur de la pression différentielle avec une valeur de seuil, obtenue par exemple par apprentissage préalable, en dessous de laquelle on considère que le filtre à particules est dégradé, voire hors service, tel que le montre le procédé divulgué dans FR 2 795 132.

Ce type de technique présente cependant un inconvénient majeur, dans la mesure où elle ne tient pas compte des conditions d'acquisition de la pression différentielle.

En effet, au cours de phases transitoires, apparaissant notamment lors de fortes accélérations ou lors de fortes décélérations du moteur, des phénomènes transitoires ainsi engendrés provoquent des bruits de mesure relativement importants et ce, d'autant plus que le filtre est dégradé.

Le but de l'invention est donc de pallier cet inconvénient et de fournir un procédé et un dispositif de diagnostic aptes à détecter des dysfonctionnements d'un filtre à particules d'une ligne d'échappement d'un moteur à combustion interne et ce, avec une fiabilité accrue.

Ainsi, selon l'invention, il est proposé un procédé de diagnostic de l'état de fonctionnement d'une ligne d'échappement d'un moteur à combustion interne équipée d'un filtre à particules, comprenant les étapes de mesure de la pression différentielle régnant en amont et en aval du filtre à particules, d'évaluation d'un critère de diagnostic à partir de la valeur de la pression différentielle mesurée et de traitement du paramètre de diagnostic pour la détection d'un dysfonctionnement du filtre à particules.

Selon un aspect de ce procédé, postérieurement à la mesure de la pression différentielle, on met en oeuvre une étape de détection de points de fonctionnement stable du moteur, et l'on évalue ledit paramètre de diagnostic en cas de fonctionnement stable du moteur.

Selon une autre caractéristique de ce procédé, l'étape de détection des points de fonctionnement stable du moteur comprend le calcul de la moyenne glissante et de l'écart type de la pression différentielle, l'évaluation du rapport entre l'écart type et la valeur moyenne glissante calculés et de comparaison de la valeur du rapport évalué avec une valeur de seuil de détection de fonctionnement stable.

Selon un exemple de mise en oeuvre, le procédé comprend en outre une étape de détermination de la valeur moyenne glissante du débit volumique de gaz d'échappement dans le filtre à particules. Au cours de l'étape d'évaluation du paramètre de diagnostic, on extrait de moyens de mémorisation, dans lesquels sont stockées un ensemble de valeurs de pression différentielle $\overline{\Delta P}'$ régnant entre l'amont et l'aval d'un filtre à particules dépourvu de suies qui correspondent chacune à une valeur de débit volumique de gaz d'échappement, une valeur correspondante de pression différentielle $\overline{\Delta P}$, et l'on calcule la valeur du paramètre de diagnostic à partir de la valeur de pression différentielle mesurée $\overline{\Delta P}$ et de la valeur de pression différentielle $\overline{\Delta P}'$ extraite des moyens de mémorisation.

Par exemple, le paramètre de diagnostic C est élaboré à partir de la relation suivante :

$$C = 1 - \frac{\overline{\Delta P}}{\overline{\Delta P}'}$$

dans laquelle :

$\overline{\Delta P}$ désigne la valeur de la pression différentielle mesurée ; et
$\overline{\Delta P}'$ désigne la valeur de la pression différentielle extraite des moyens de mémorisation.

Le paramètre de diagnostic C peut également être élaboré à partir de la relation suivante :

$$C = \frac{\overline{\Delta P}}{\Delta P \text{max}}$$

dans laquelle :

$\overline{\Delta P}$ désigne la valeur de la pression différentielle mesurée ; et

$\overline{\Delta P}$max désigne la valeur maximale de la pression différentielle autorisée pour le filtre à particules ;

Selon un autre aspect de ce procédé, on détermine la valeur moyenne glissante du débit volumique de gaz d'échappement et la pression différentielle entre l'amont et l'aval du filtre à particules, on calcule la valeur du paramètre de diagnostic en continu pour chaque point de fonctionnement stable, on élabore un paramètre de diagnostic global à partir des paramètres de diagnostic de chaque point de fonctionnement, et l'on compare la valeur du paramètre de diagnostic global avec une valeur de seuil de détection d'un dysfonctionnement du filtre à particules.

Selon un autre aspect de ce procédé, l'étape d'élaboration du paramètre de diagnostic comprend une sommation des paramètres de diagnostics respectifs des points de fonctionnement stable.

De préférence, l'étape d'élaboration du paramètre de diagnostic global comprend une pondération de la valeur calculée des paramètres de diagnostic des points de fonctionnement stable en fonction de la valeur moyenne glissante du débit volumique de gaz d'échappement dans le filtre à particules.

Selon l'invention, il est également proposé un dispositif de diagnostic de l'état de fonctionnement d'une ligne d'échappement d'un moteur à combustion interne équipé d'un filtre à particules, comprenant des moyens de mesure de la pression différentielle régnant entre l'amont et l'aval du filtre à particules et une unité centrale comprenant des moyens pour l'évaluation d'un paramètre de diagnostic à partir de la valeur de la pression différentielle mesurée et des moyens de traitement du paramètre de diagnostic évalué pour la détection d'un dysfonctionnement du filtre à particules.

Ce dispositif comporte en outre des moyens de détection de points de fonctionnement stabilisé du moteur à particules, ledit paramètre de diagnostic étant évalué en cas de fonctionnement stable du moteur.

Selon une caractéristique de ce dispositif, l'unité centrale comporte des moyens de calcul de la moyenne glissante et de l'écart type de la pression différentielle, des moyens pour évaluer le rapport entre l'écart type et la valeur moyenne glissante calculés et des moyens de comparaison de la valeur du rapport évalué avec une valeur de seuil de détection de fonctionnement stabilisé.

Selon une autre caractéristique de ce dispositif, l'unité centrale comporte des moyens de mémorisation dans lesquels sont stockées un ensemble de valeurs moyennes de pression différentielle régnant entre l'amont et l'aval d'un filtre à particules dépourvu de suies qui correspondent chacune à une valeur de débit volumique de gaz d'échappement, pour le calcul du paramètre de diagnostic à partir de la pression différentielle régnant entre l'amont et l'aval du filtre à particules et une valeur correspondante extraite des moyens de mémorisation.

Selon encore une autre caractéristique de ce dispositif, l'unité centrale comporte en outre des moyens de mémorisation dans lesquels est stockée une valeur maximale de pression différentielle autorisée pour le filtre à particules, pour le calcul du paramètre de diagnostic à partir de la pression différentielle régnant entre l'amont et l'aval du filtre à particules et ladite valeur maximale de pression différentielle extraite des moyens de mémorisation.

Par exemple, le dispositif comporte des moyens de pondération des paramètres de diagnostic de chaque point de fonctionnement stabilisé du moteur, des moyens de sommation des paramètres de diagnostic pondérés pour l'élaboration d'un paramètre de diagnostic global et des moyens de comparaison du paramètre de diagnostic global avec une valeur de seuil de détection de dysfonctionnement du filtre à particules.

D'autres buts, caractéristiques et avantages de l'invention ressortiront de la description suivante, donnée uniquement à titre d'exemple non limitatif, et faite en référence aux dessins annexés, sur lesquels :

- la figure 1 est une vue schématique d'un moteur à combustion interne équipé d'une ligne d'échappement pourvue d'un filtre à particules associé à un dispositif de diagnostic conforme à l'invention ; et
- la figure 2 est un organigramme montrant les principales phases d'un procédé de diagnostic conforme à l'invention.

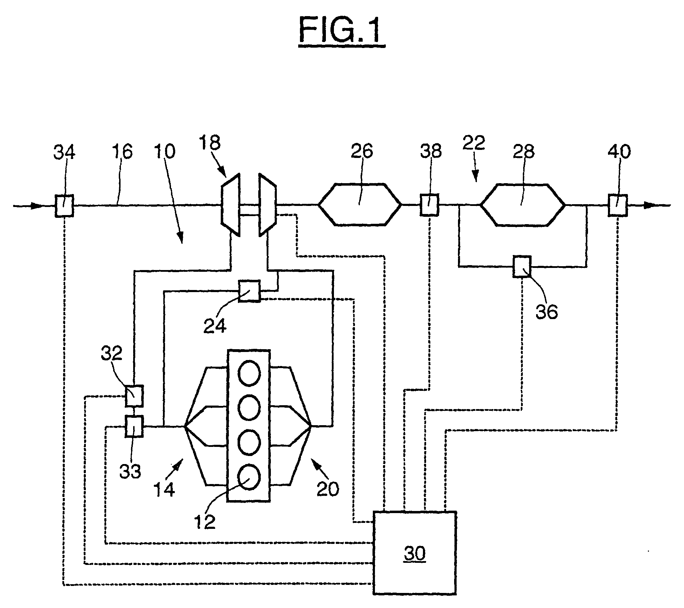

Sur la figure 1, on a représenté de manière schématique la structure générale d'un moteur à combustion interne d'un véhicule automobile, désigné par la référence numérique générale 10.

Dans l'exemple de réalisation considéré, le moteur 10 est pourvu de quatre cylindres 12 en ligne.

Les cylindres 12 sont alimentés en air par l'intermédiaire d'un répartiteur d'admission 14, lui-même alimenté par une conduite 16 pourvue d'un filtre à air (non représenté) et d'un turbocompresseur 18 de suralimentation du moteur en air.

Un collecteur d'échappement 20 récupère les gaz d'échappement issus de la combustion et évacue ces derniers vers l'extérieur, en passant par le compresseur 18, et par une ligne d'échappement 22.

Un circuit de recirculation des gaz d'échappement, comprenant une partie du circuit d'alimentation du moteur en air et une partie du circuit d'échappement, récupère une partie des gaz d'échappement dans le collecteur d'admission 18, de manière à limiter la quantité d'oxyde d'azote produit par la combustion tout en évitant la formation de fumées dans les gaz d'échappement.

Comme on le voit sur cette figure 1, le circuit de recirculation comporte essentiellement une soupape de réglage du flux de gaz d'échappement recirculés, désignée par la référence numérique 24.

En ce qui concerne la ligne d'échappement 22, celle-ci comporte essentiellement un convertisseur catalytique 26 de type classique et, en aval, en considérant le sens de circulation des gaz d'échappement dans la ligne d'échappement 22, un filtre à particules 28 adapté pour piéger les particules ou suies contenues dans les gaz d'échappement.

Enfin, le moteur 10 est associé à une unité centrale 30 assurant le contrôle du fonctionnement du moteur 10, notamment le réglage de ses paramètres de fonctionnement, ainsi que le contrôle du fonctionnement du filtre à particules 28, et le diagnostic de son état de fonctionnement.

Pour procéder au contrôle du fonctionnement du moteur 10, celui-ci est pourvu d'un capteur 32 de pression de suralimentation et d'un capteur 33 de température d'admission d'air dans le répartiteur d'admission 14, ainsi qu'un capteur de débit 34 équipant la conduite 16 d'alimentation. Ces capteurs, ainsi que les principaux organes fonctionnels du moteur et de son circuit d'alimentation en air, sont raccordés à l'unité centrale 30.

En ce qui concerne le contrôle du fonctionnement du filtre à particules 28 ou, de manière générale, de la ligne d'échappement 22 et, en particulier, le diagnostic de son état de fonctionnement, la ligne d'échappement 22 est pourvue d'un capteur différentiel 36, de type classique, apte à mesurer la pression différentielle régnant entre l'amont et l'aval du filtre à particules 28. En outre, des capteurs de température 38 et 40 sont disposés respectivement en amont et en aval du filtre à particules 28.

Les capteurs 36, 38 et 40 et, en particulier, le capteur de pression différentielle 36, sont raccordés à l'unité centrale 30. Celle-ci incorpore, stockés en mémoire, tous les moyens logiciels permettant de procéder au contrôle du fonctionnement du filtre à particules 28, en particulier à partir de la pression différentielle régnant de part et d'autre du filtre 28, en calculant, à partir de cette dernière, la valeur d'un paramètre de diagnostic et en traitant la valeur de ce paramètre pour détecter tout dysfonctionnement susceptible de se produire, comme cela sera décrit par la suite.

Plus particulièrement, pour procéder au contrôle du fonctionnement du filtre à particules, l'unité centrale 30 est pourvue de moyens permettant de détecter les points de fonctionnement stable du moteur, de manière à n'évaluer le paramètre de diagnostic qu'en cas de fonctionnement stabilisé.

A cet effet, l'unité centrale 30 procède à un calcul de la moyenne glissante et de l'écart type de la pression différentielle sur une durée prédéterminée calibrable, procède au calcul du rapport entre l'écart type et la valeur moyenne glissante calculée, puis compare la valeur du rapport ainsi calculé avec une valeur de seuil de détection de fonctionnement stabilisée.

Ainsi, pour chacun de ces points de fonctionnement stabilisés détectés, il est procédé à un diagnostic de l'état de fonctionnement du filtre à particules, de manière à détecter tout dysfonctionnement ou toute défaillance de ce dernier.

On notera que, de préférence, on procède à l'évaluation d'un paramètre de diagnostic pour chaque point de fonctionnement stabilisé, et l'on évalue un paramètre de diagnostic global à partir de l'ensemble de ces paramètres de diagnostic pour détecter les dysfonctionnements à partir des paramètres de diagnostic évalués pour chacun des points de fonctionnement stabilisé.

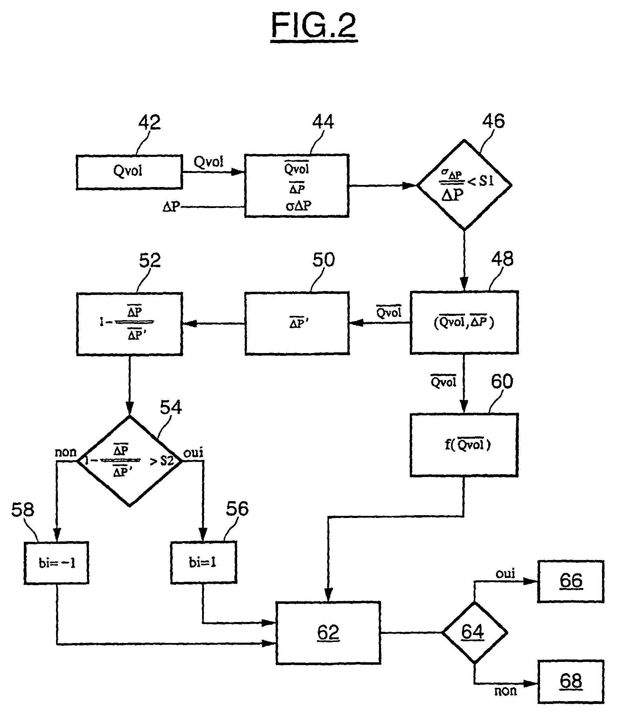

On va maintenant décrire, en référence à la figure 2, les principales phases du procédé de diagnostic mis en oeuvre au sein de l'unité centrale 30.

Tout d'abord, pour procéder à la détection des points de fonctionnement stabilisé, on calcule la valeur du débit volumique Qvol des gaz d'échappement dans le filtre à particules (étape 42). Puis, lors de l'étape 44 suivante, on calcule la valeur moyenne glissante $\overline{Qvol}$ du débit volumique des gaz d'échappement.

Parallèlement, au cours de cette étape 44, on acquiert la valeur ΔP de la pression différentielle régnant de part et d'autre du filtre à particules 28, telle que délivrée par le capteur 36, puis on calcule la valeur moyenne glissante $\overline{\Delta P}$ et l'écart type σΔP de la pression différentielle. Comme indiqué précédemment, ces étapes sont effectuées sur une durée prédéterminée.

Au cours de l'étape 46 suivante, on calcule le rapport R entre l'écart type et la valeur moyenne glissante calculée et l'on compare la valeur du rapport ainsi calculée avec une valeur de seuil S1 de détection de fonctionnement stabilisée.

Ainsi, au cours de cette étape 46, pour un point de fonctionnement du filtre à particules 28, on vérifie que ce point de fonctionnement correspond à un fonctionnement stabilisé du moteur, en vérifiant l'inégalité suivante :σΔ

$$\frac{\sigma \Delta P}{\overline{\Delta P}} < S1 \qquad (1)$$

Dans le cas où il est détecté que le point de fonctionnement considéré est un point de fonctionnement stabilisé pour le moteur, on stocke alors en mémoire un couple ($\overline{Qvol}$, $\overline{\Delta P}$) de valeurs moyennes glissante de débit volumique des gaz d'échappement et de pression différentielle (étape 48) qui correspondent à ce point de fonctionnement.

Le procédé se poursuit alors par une phase proprement dite de diagnostic de l'état de fonctionnement du filtre à particules.

Cette phase de diagnostic est mise en oeuvre pour chaque couple de points ($\overline{Qvol}$, $\overline{\Delta P}$) mémorisé.

Cette phase débute par une première étape 50, au cours de laquelle on extrait, des moyens de mémorisation de l'unité centrale 30, dans laquelle sont chargées un ensemble de valeurs moyennes glissantes de pression différentielle régnant de part et d'autre d'un filtre à particules non dégradé, exempt de suie et de résidus, obtenues par apprentissage préalable, pour différentes valeurs moyennes de débit volumique de gaz d'échappement, une valeur de pression différentielle $\overline{\Delta P}'$ correspondant à la valeur de débit volumique de gaz d'échappement $\overline{Qvol}$.

Lors de l'étape 52 suivante, le paramètre de diagnostic C est alors élaboré.

Ce paramètre C est élaboré à partir de la relation suivante :

$$C = 1 - \frac{\overline{\Delta P}}{\overline{\Delta P}'} \qquad (2)$$

Lors de l'étape 54 suivante, on compare la valeur du paramètre de diagnostic C avec une valeur de seuil S2.

Dans le cas où le paramètre de diagnostic est supérieur à la valeur de seuil S2, on positionne à 1 une valeur binaire bi pour le point de fonctionnement i considéré (étape 56).

Si tel n'est pas le cas, c'est-à-dire si la valeur du paramètre de diagnostic est inférieure à la valeur de seuil S2, la valeur binaire bi est positionnée à 0 ou -1 (étape 58), de préférence -1.

On notera que postérieurement à l'étape 48 de mémorisation du couple ($\overline{Qvol}$, $\overline{\Delta P}$) de valeurs moyennes glissantes de débit volumique de gaz d'échappement et de pression différentielle, et en parallèlc aux étapes 50 et 52 d'évaluation du paramètre de diagnostic, on procède de manière optionnelle à une pondération de la valeur de seuil S2 en fonction du débit volumique de gaz d'échappement, par exemple à partir de données obtenues par apprentissage préalable, de manière à prendre en considération les variations engendrées, dans la mesure et dans le calcul de la valeur moyenne glissante de la pression différentielle, par une variation du niveau de pression différentiel, et donc du débit d'air (étape 60).

Au cours de cette étape 60, on élabore, pour chaque point de fonctionnement, un coefficient de pondération. Ces coefficients sont destinés à être appliqués respectivement aux valeurs binaires bi calculées lors des étapes 56 et 58 précédemment mentionnées, pour chaque point de fonctionnement successivement considérés, pour pondérer ces valeurs en fonction de la valeur moyenne glissante du débit volumique des gaz d'échappement.

En effet, lors de l'étape 62 suivante, on élabore un paramètre de diagnostic global pour l'ensemble des points de fonctionnement stable.

Pour ce faire, au cours de cette étape, on procède à une pondération des valeurs binaires des points de fonctionnement stable en utilisant les coefficients de pondération Cp élaborés lors de l'étape 60 précédente en multipliant, pour chaque point de fonctionnement, la valeur binaire bi par le coefficient de pondération Cp correspondant et en procédant au calcul de la somme des valeurs binaires pondérées.

On procède alors à un test par comparaison de la valeur du paramètre de diagnostic global avec un seuil de détection de dysfonctionnement du filtre à particules (étape 64).

Ainsi, s'il est détecté, lors de cette étape 64, que le paramètre de diagnostic global est supérieur à la valeur de seuil, on décide, lors de l'étape 66 suivante, que le filtre à particules est défectueux.

Au contraire, si la valeur du paramètre de diagnostic est inférieure à cette valeur de seuil de détection de dysfonctionnement, on décide, lors de l'étape 68 suivante, que le chiffre à particules a conservé son intégrité.

On notera que l'invention n'est pas limitée au mode de réalisation décrit.

En effet, dans le mode de réalisation décrit en référence à la figure 2, le paramètre de diagnostic est élaboré à partir de la relation suivante :

$$C = 1 - \frac{\overline{\Delta P}}{\overline{\Delta P}'} \qquad (2)$$

Il serait également possible, en variante, d'élaborer le paramètre de diagnostic à partir de toute autre relation mathématique liant la valeur moyenne glissante de la pression différentielle régnant entre l'amont et l'aval du filtre à particules et une valeur correspondante extraite des moyens de mémorisation de l'unité centrale 30.

Pour le diagnostic du colmatage du filtre, le paramètre de diagnostic pourrait être élaboré à partir de la relation suivante :

$$C = \frac{\overline{\Delta P}}{\overline{\Delta P}\max} \qquad (3)$$

dans laquelle :

$\overline{\Delta P}\max$ représente une valeur maximale de pression différentielle autorisée pour le filtre à particules, de manière à détecter le colmatage du filtre en vue d'interdire toute régénération de ce dernier qui serait susceptible d'engendrer une élévation de température trop importante.

**Revendications**

**1.** Procédé de diagnostic de l'état de fonctionnement d'une ligne d'échappement d'un moteur à combustion interne équipée d'un filtre à particules (28), comprenant les étapes de mesure de la pression différentielle régnant entre l'amont et l'aval du filtre à particules, d'évaluation d'un paramètre de diagnostic (C) à partir de la valeur de la pression différentielle mesurée et de traitement du paramètre de diagnostic pour la détection d'un dysfonctionnement du filtre à particules, **caractérisé en ce que** postérieurement à la mesure de la pression différentielle, on met en oeuvre une étape de détection de points de fonctionnement stable du moteur, et l'on évalue ledit paramètre de diagnostic (C) en cas de fonctionnement stable du moteur.

2.  Procédé selon la revendication 1, **caractérisé en ce que** l'étape de détection des points de fonctionnement stable du moteur comprend le calcul de la moyenne glissante ($\overline{\Delta P}$) et de l'écart type ($\sigma \Delta P$) de la pression différentielle, l'évaluation du rapport entre l'écart type et la valeur moyenne glissante calculés et de comparaison de la valeur du rapport évalué avec une valeur de seuil (S1) de détection de fonctionnement stable.

3.  Procédé selon l'une des revendications 1 et 2, **caractérisé en ce qu'**il comprend en outre une étape de détermination de la valeur moyenne glissante du débit volumique de gaz d'échappement dans le filtre à particules (28), et **en ce qu'**au cours de l'étape d'évaluation du paramètre de diagnostic (C), on extrait de moyens de mémorisation, dans lesquels sont stockées un ensemble de valeurs de pression différentielle $\overline{\Delta P}$' régnant entre l'amont et l'aval d'un filtre à particules dépourvu de suies qui correspondent chacune à une valeur de débit volumique de gaz d'échappement, une valeur correspondante de pression différentielle $\overline{\Delta P}$, et l'on calcule la valeur du paramètre de diagnostic à partir de la valeur de pression différentielle mesurée $\overline{\Delta P}$ et de la valeur de pression différentielle $\overline{\Delta P}$' extraite des moyens de mémorisation.

4.  Procédé selon la revendication 3, **caractérisé en ce que** le paramètre de diagnostic C est élaboré à partir de la relation suivante :

$$C = 1 - \frac{\overline{\Delta P}}{\overline{\Delta P'}}$$

    dans laquelle :

    $\overline{\Delta P}$ désigne la valeur de la pression différentielle mesurée ; et
    $\overline{\Delta P}$' désigne la valeur de la pression différentielle extraite des moyens de mémorisation.

5.  Procédé selon la revendication 3, **caractérisé en ce que** le paramètre de diagnostic C est élaboré à partir de la relation suivante :

$$C = \frac{\overline{\Delta P}}{\Delta P \text{max}}$$

    dans laquelle :

    $\overline{\Delta P}$ désigne la valeur de la pression différentielle mesurée ; et
    $\Delta P$max désigne la valeur maximale de la pression différentielle autorisée pour le filtre à particules ;

6.  Procédé selon l'une quelconque des revendications 3 à 5, **caractérisé en ce que** l'on détermine la valeur moyenne glissante du débit volumique ($\overline{Qvol}$) de gaz d'échappement et la pression différentielle ($\overline{\Delta P}$) entre l'amont et l'aval du filtre à particules, on calcule la valeur du paramètre de diagnostic en continu pour chaque point de fonctionnement stable, on élabore un paramètre de diagnostic global à partir des paramètres de diagnostic de chaque point de fonctionnement, et l'on compare la valeur du paramètre de diagnostic global avec une valeur de seuil de détection d'un dysfonctionnement du filtre à particules.

7.  Procédé selon la revendication 6, **caractérisé en ce que** l'étape d'élaboration du paramètre de diagnostic comprend une sommation des paramètres de diagnostics respectifs des points de fonctionnement stable.

8.  Procédé selon la revendication 7, **caractérisé en ce que** l'étape d'élaboration du paramètre de diagnostic global comprend une pondération de la valeur calculée des paramètres de diagnostic des points de fonctionnement stable en fonction de la valeur moyenne glissante du débit volumique de gaz d'échappement dans le filtre à particules.

9.  Dispositif de diagnostic de l'état de fonctionnement d'une ligne d'échappement d'un moteur à combustion interne équipée d'un filtre à particules (28), comprenant des moyens de mesure (36) de la pression différentielle régnant entre l'amont et l'aval du filtre à particules (28) et une unité centrale (30) comprenant des moyens pour l'évaluation d'un paramètre de diagnostic à partir de la valeur de la pression différentielle ($\Delta P$) mesurée et des moyens de traitement du paramètre de diagnostic évalué pour la détection d'un dysfonctionnement du filtre à particules, **caractérisé en ce qu'**il comporte en outre des moyens de détection de points de fonctionnement stable du moteur, ledit paramètre de diagnostic étant évalué en cas de fonctionnement stable du moteur.

10. Dispositif selon la revendication 9, **caractérisé en**

**ce que** l'unité centrale comporte des moyens de calcul de la moyenne glissante ($\overline{\Delta P}$) et de l'écart type ($\sigma\Delta P$) de la pression différentielle, des moyens pour évaluer le rapport entre l'écart type et la valeur moyenne glissante calculés et des moyens de comparaison de la valeur du rapport évalué avec une valeur de seuil de détection de fonctionnement stabilisé.

11. Dispositif selon l'une des revendications 9 et 10, **caractérisé en ce que** l'unité centrale (30) comporte des moyens de mémorisation dans lesquels sont stockées un ensemble de valeurs moyennes de pression différentielle régnant entre l'amont et l'aval d'un filtre à particules dépourvu de suies qui correspondent chacune à une valeur de débit volumique de gaz d'échappement, pour le calcul du paramètre de diagnostic à partir de la pression différentielle régnant entre l'amont et l'aval du filtre à particules et une valeur correspondante extraite des moyens de mémorisation.

12. Dispositif selon l'une quelconque des revendications 9 à 11, **caractérisé en ce que** l'unité centrale comporte en outre des moyens de mémorisation dans lesquels est stockée une valeur maximale de pression différentielle autorisée pour le filtre à particules, pour le calcul du paramètre de diagnostic à partir de la pression différentielle régnant entre l'amont et l'aval du filtre à particules et ladite valeur maximale de pression différentielle extraite des moyens de mémorisation.

13. Dispositif selon l'une quelconque des revendications 9 à 12, **caractérisé en ce qu'**il comporte des moyens (30) de pondération des paramètres de diagnostic de chaque point de fonctionnement stabilisé du moteur, des moyens de sommation (30) des paramètres de diagnostic pondérés pour l'élaboration d'un paramètre de diagnostic global et des moyens de comparaison du paramètre de diagnostic global avec une valeur de seuil de détection de dysfonctionnement du filtre à particules.

**Patentansprüche**

1. Verfahren zur Diagnose des Zustands des Betriebs einer Abgasleitung eines Verbrennungsmotors, die mit einem Partikelfilter (28) ausgestattet ist, umfassend die Schritte der Messung des Differentialdrucks, der zwischen der Seite vor und der Seite nach dem Partikelfilter herrscht, der Berechnung eines Diagnoseparameters (C), ausgehend vom Wert des gemessenen Differentialdrucks und die Verarbeitung des Diagnoseparameters zur Entdeckung einer Funktionsstörung des Partikelfilters, **dadurch gekennzeichnet, dass** man nach der Messung des Differentialdrucks einen Schritt der Ermittlung von Punkten stabilen Betriebs des Motors durchführt und man den Diagnoseparameter (C) im Fall stabilen Betriebs des Motors berechnet.

2. Verfahren gemäß Anspruch 1, **dadurch gekennzeichnet, dass** der Schritt der Ermittlung der stabilen Betriebspunkte des Motors die Berechnung des gleitenden Mittelwerts ($\overline{\Delta P}$) und der Standardabweichung ($\sigma\,\Delta P$) des Differentialdrucks umfasst, die Berechnung des Verhältnisses zwischen der berechneten Standardabweichung und dem berechneten gleitenden Mittelwert, und den Vergleich des berechneten Werts des Verhältnisses mit einem Schwellenwert (S1) der Ermittlung eines stabilen Betriebs.

3. Verfahren gemäß einem der Ansprüche 1 und 2, **dadurch gekennzeichnet, dass** es darüber hinaus einen Schritt der Ermittlung des gleitenden Mittelwerts des volumenbezogenen Ausstoßes an Abgasen im Partikelfilter (28) umfasst, und dadurch, dass man im Verlauf des Schritts der Berechnung des Diagnoseparameters (C) Speichermitteln, in denen eine Gesamtheit von Werten des Differentialdrucks $\overline{\Delta P}'$, der zwischen der Seite vor und der Seite nach einem Partikelfilter ohne Ruß herrscht, die jeweils einem Wert des volumenbezogenen Ausstoßes von Abgasen entsprechen, einen entsprechenden Wert des Differentialdrucks $\overline{\Delta P}$ entnimmt, und man den Wert des Diagnoseparameters berechnet, ausgehend vom gemessenen Wert des Differentialdrucks $\overline{\Delta P}$ und dem Wert des Differentialdrucks $\overline{\Delta P}'$, der den Speichermitteln entnommen wurde.

4. Verfahren gemäß Anspruch 3, **dadurch gekennzeichnet, dass** der Diagnoseparameter C ausgehend von der folgenden Beziehung ausgearbeitet wird:

$$C = 1 - \frac{\overline{\Delta P}}{\overline{\Delta P}'}$$

in der:

$\overline{\Delta P}$ den Wert des gemessenen Differentialdrucks bezeichnet; und
$\overline{\Delta P}'$ den Wert des Differentialdrucks bezeichnet, der den Speichermitteln entnommen wird.

5. Verfahren gemäß Anspruch 3, **dadurch gekennzeichnet, dass** der Diagnoseparameter C ausgehend von der folgenden Beziehung ausgearbeitet wird:

$$C = \frac{\overline{\Delta P}}{\overline{\Delta P}\text{max}}$$

in der:

> $\overline{\Delta P}$ den Wert des gemessenen Differential-drucks bezeichnet; und
> $\overline{\Delta P}$max den maximalen Wert des Differentialdrucks bezeichnet, der für den Partikelfilter erlaubt ist.

6. Verfahren gemäß einem beliebigen der Ansprüche 3 bis 5, **dadurch gekennzeichnet, dass** man den gleitenden Mittelwert des volumenbezogenen Ausstoßes ($\overline{Qvol}$) von Abgasen und den Differentialdruck $\overline{\Delta P}$ zwischen der Seite vor und der Seite nach dem Partikelfilter bestimmt, man den Wert des Diagnoseparameters fortlaufend für jeden Punkt stabilen Betriebs berechnet, man einen globalen Diagnoseparameter ausgehend von den Diagnoseparametern eines jeden Betriebspunkts ausarbeitet und man den globalen Diagnoseparameter mit einem Schwellenwert zur Entdeckung einer Funktionsstörung des Partikelfilters vergleicht.

7. Verfahren gemäß Anspruch 6, **dadurch gekennzeichnet, dass** der Schritt der Ausarbeitung des Diagnoseparameters eine Summierung der jeweiligen Diagnoseparameter der Punkte stabilen Betriebs umfasst.

8. Verfahren gemäß Anspruch 7, **dadurch gekennzeichnet, dass** der Schritt der Ausarbeitung des globalen Diagnoseparameters eine Gewichtung des berechneten Wertes der Diagnoseparameter der Punkte stabilen Betriebs abhängig vom gleitenden Mittelwert des volumenbezogenen Ausstoßes von Abgasen im Partikelfilter umfasst.

9. Vorrichtung zur Diagnose des Zustands des Betriebs einer Abgasleitung eines Verbrennungsmotors, die mit einem Partikelfilter (28) ausgestattet ist, umfassend Mittel zur Messung (36) des Differentialdrucks, der zwischen der Seite vor und der Seite nach einem Partikelfilter herrscht, und eine Zentraleinheit (30), umfassend Mittel zur Berechnung eines Diagnoseparameters, ausgehend vom Wert des gemessenen Differentialdrucks $\Delta P$ und Mittel zur Verarbeitung des berechneten Diagnoseparameters zur Entdeckung einer Funktionsstörung des Partikelfilters,
**dadurch gekennzeichnet, dass** sie auch Mittel zur Ermittlung von Punkten stabilen Betriebs des Motors aufweist, wobei der Diagnoseparameter im Fall stabilen Betriebs des Motors berechnet wird.

10. Vorrichtung gemäß Anspruch 10, **dadurch ge-**

**kennzeichnet, dass** die Zentraleinheit Mittel zur Berechnung des gleitenden Mittelwerts $\overline{\Delta P}$ und der Standardabweichung ($\sigma\Delta P$) des Differentialdrucks umfasst, Mittel zur Berechnung des Verhältnisses zwischen der Standardabweichung und dem berechneten gleitenden Mittelwert mit einem Schwellenwert der Ermittlung eines stabilen Betriebs.

11. Vorrichtung gemäß einem der Ansprüche 9 und 10, **dadurch gekennzeichnet, dass** die Zentraleinheit (30) Speichermittel umfasst, in denen eine Gesamtheit von Mittelwerten des Differentialdrucks, der zwischen der Seite vor und der Seite nach einem Partikelfilter ohne Ruß herrscht, die jeweils einem Wert des volumenbezogenen Ausstoßes von Abgasen entsprechen, zur Berechnung des Diagnoseparameters, ausgehend vom Differentialdruck, der zwischen der Seite vor und der Seite nach dem Partikelfilter herrscht und einem entsprechenden den Speichermitteln entnommen Wert.

12. Vorrichtung gemäß irgendeinem der Ansprüche 9 bis 11, **dadurch gekennzeichnet, dass** die Zentraleinheit darüber hinaus Speichermittel umfasst, in denen ein Maximalwert für den erlaubten Differentialdruck gespeichert ist, für die Berechnung des Diagnoseparameters ausgehend vom Differentialdruck, der zwischen der Seite vor und der Seite nach dem Partikelfilter herrscht und dem den Speichermitteln entnommenen Maximalwert des Differentialdrucks.

13. Vorrichtung gemäß irgendeinem der Ansprüche 9 bis 12, **dadurch gekennzeichnet, dass** sie Mittel (30) zur Gewichtung der Diagnoseparameter eines jeden Punktes stabilen Betriebs des Motors umfasst, Mittel zur Summierung (30) der gewichteten Diagnoseparameter zur Ausarbeitung eines globalen Diagnoseparameters, und Mittel zum Vergleich des globalen Diagnoseparameters mit einem Schwellenwert der Entdeckung einer Funktionsstörung des Partikelfilters.

**Claims**

1. Method of diagnosis of the operating status of an exhaust system of an internal combustion engine equipped with a particle filter (28), comprising the stages of measuring the differential pressure existing upstream and downstream of the particle filter, determining a diagnosis parameter (C) from the differential pressure value measured and processing the diagnosis parameter for the detection of a malfunction of the particle filter, **characterized in that** after the measurement of the differential pressure, a stage of detection of stable operating points of the engine is implemented, and said diagnosis parameter (C) is determined in the event of stable operation of the engine.

2. Method according to claim 1, **characterized in that** the stage of detection of the stable operating points of the engine comprises the calculation of the running average ($\overline{\Delta P}$) and the standard deviation ($\sigma\Delta P$) of the differential pressure, the determination of the ratio between the standard deviation and the running average value calculated and comparison of the value of the ratio determined with a stable operation detection threshold value (S1).

3. Method according to one of claims 1 and 2, **characterized in that** it also comprises a stage of determination of the running average value of the exhaust gas volume flow rate in the particle filter (28), and **in that** during the stage of determination of the diagnosis parameter (C), a corresponding differential pressure value $\overline{\Delta P}$ is retrieved from storage means in which is stored a set of differential pressure values $\overline{\Delta P}'$ existing upstream and downstream of a particle filter free of soot, each of which corresponds to an exhaust gas volume flow rate value, and the value of the diagnosis parameter is calculated from the differential pressure value $\overline{\Delta P}$ measured and the differential pressure value $\overline{\Delta P}'$ retrieved from the storage means.

4. Method according to claim 3, **characterized in that** the diagnosis parameter C is worked out from the following relationship:

$$C = 1 - \frac{\overline{\Delta P}}{\overline{\Delta P'}}$$

where:

$\overline{\Delta P}$ denotes the differential pressure value measured; and
$\overline{\Delta P}'$ denotes the differential pressure value retrieved from the storage means.

5. Method according to claim 3, **characterized in that** the diagnosis parameter C is worked out form the following relationship:

$$C = \frac{\overline{\Delta P}}{\overline{\Delta P}\text{max}}$$

where:

$\overline{\Delta P}$ denotes the differential pressure value measured; and
$\overline{\Delta P}\text{max}$ denotes the maximum differential pressure value permitted for the particle filter.

6. Method according to any one of claims 3 to 5, **characterized in that** the running average value of the exhaust gas volume flow rate ($\overline{Qvol}$) and the differential pressure ($\overline{\Delta P}$) upstream and downstream of the particle filter is determined, the value of the diagnosis parameter is continuously calculated for each stable operating point, an overall diagnosis parameter is worked out from diagnosis parameters of each operating point, and the value of the overall diagnosis parameter is compared with a particle filter malfunction detection threshold value.

7. Method according to claim 6, **characterized in that** the stage of working out the diagnosis parameter comprises a summation of the respective diagnosis parameters of the stable operating points.

8. Method according to claim 7, **characterized in that** the stage of working out the overall diagnosis parameter comprises a weighting of the calculated value of the diagnosis parameters of the stable operating points as a function of the running average value of the exhaust gas volume flow rate in the particle filter.

9. Device for the diagnosis of the operating status of an exhaust system of an internal combustion engine equipped with a particle filter (28), comprising means (36) of measuring the differential pressure existing upstream and downstream of the particle filter (28) and a central processing unit (30) comprising means of determining a diagnosis parameter from the differential pressure value ($\Delta P$) measured and means of processing the diagnosis parameter determined for the detection of a malfunction of the particle filter, **characterized in that** it also comprises means of detecting stable operating points of the engine, said diagnosis parameter being determined in the event of stable operation of the engine.

10. Device according to claim 9, **characterized in that** the central processing unit comprises means of calculating the running average ($\overline{\Delta P}$) and the standard deviation ($\sigma\Delta P$) of the differential pressure, means of determining the ratio between the standard deviation and the running average value calculated and means of comparing the value of the ratio determined with a stabilized operation detection threshold value.

11. Device according to claims 9 and 10, **characterized in that** the central processing unit (30) comprises storage means in which a set of average differential pressure values existing upstream and downstream of a particle filter free of soot, each of which corresponds to an exhaust gas volume flow rate value, for calculating the diagnosis parameter from the differential pressure existing upstream and downstream of the particle filter and a corresponding value retrieved from the storage means.

12. Device according to any one of claims 9 to 11, **characterized in that** the central processing unit also comprises storage means in which a maximum differential pressure value permitted for the particle filter is stored, for calculating the diagnosis parameter from the differential pressure existing upstream and downstream of the particle filter and said maximum differential pressure value retrieved from the storage means.

13. Device according to any one of claims 9 to 12, **characterized in that** it comprises means of weighting (30) the diagnosis parameters of each stabilized operating point of the engine, means of summation (30) of the weighted diagnosis parameters for working out an overall diagnosis parameter and means of comparing the overall diagnosis parameter with a particle filter malfunction detection threshold value.

# FIG.1

# FIG.2

42  |  Qvol  |  →Qvol→  44  | $\overline{Qvol}$ $\overline{\Delta P}$ $\sigma\Delta P$ |  46  | $\dfrac{\sigma_{\Delta P}}{\overline{\Delta P}} < S1$

ΔP —→

52  | $1 - \dfrac{\overline{\Delta P}}{\overline{\Delta P'}}$ |  ←  50  | $\overline{\Delta P'}$ |  ←$\overline{Qvol}$←  48  | $(\overline{Qvol}, \overline{\Delta P})$

→$\overline{Qvol}$  60  | $f(\overline{Qvol})$

54  | non — $1 - \dfrac{\overline{\Delta P}}{\overline{\Delta P'}} > S2$ — oui

58  | bi = −1 |     56  | bi = 1

62  |  |  64  | oui → 66

non → 68